Europäisches Patentamt

European Patent Office

Office européen des brevets

(19)

(11) Veröffentlichungsnummer : **0 069 321**
**B1**

# (12) EUROPÄISCHE PATENTSCHRIFT

(45) Veröffentlichungstag der Patentschrift :
**20.02.85**

(21) Anmeldenummer : **82105729.6**

(22) Anmeldetag : **28.06.82**

(51) Int. Cl.⁴ : **B 65 G 67/02**, B 60 P 1/64

(54) **Verfahren zum Be- und Entladen eines Tiefladerfahrzeugs mit schweren Glasscheibenpaketen grosser Abmessungen, sowie Transporteinheit zur Durchführung des Verfahrens.**

(30) Priorität : **06.07.81 DE 3126563**

(43) Veröffentlichungstag der Anmeldung :
**12.01.83 Patentblatt 83/02**

(45) Bekanntmachung des Hinweises auf die Patenterteilung : **20.02.85 Patentblatt 85/08**

(84) Benannte Vertragsstaaten :
**AT BE DE FR GB IT LU NL SE**

(56) Entgegenhaltungen :
**DE-A- 2 653 278**
**US-A- 3 722 948**
**US-A- 3 883 020**

(73) Patentinhaber : **Karl Kässbohrer Fahrzeugwerke GmbH**
**Peter-Schmid-Strasse 13**
**D-7900 Ulm (Donau) (DE)**

**VEGLA Vereinigte Glaswerke GmbH**
**Viktoria Allee 3-5**
**D-5100 Aachen (DE)**

(72) Erfinder : **Hülsmann, Lothar, Ing. grad.**
**Pfarrer-Gau-Strasse 15**
**D-5190 Stolberg (DE)**
Erfinder : **Roeben, Alfred**
**Aachener Strasse 287**
**D-5112 Baesweiler (DE)**
Erfinder : **Wissgens, Hans**
**Stettiner Strasse 49**
**D-5100 Aachen (DE)**
Erfinder : **Gillessen, Hubert, Ing.grad.**
**Weberstrasse**
**D-5100 Aachen (DE)**
Erfinder : **Schall, Hans Karl Kässbohrer**
**Fahrzeugwerke GmbH**
**Werk Dortmund Niedersachsenweg 20**
**D-4600 Dortmund 12 Brackel (DE)**

(74) Vertreter : **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

## Beschreibung

Die Erfindung betrifft ein Verfahren zum Aufladen bzw. zum Abladen eines mit schweren Glasscheibenpaketen großer Abmessungen beladenen Traggestells auf das Tiefbett bzw. von dem Tiefbett eines Tiefladerfahrzeugs. Die Erfindung umfaßt ferner eine Transporteinheit zur Durchführung des Verfahrens, bestehend aus einem Tiefladerfahrzeug und einem auf das Tiefbett des Tiefladerfahrzeugs aufsetzbaren Traggestell, sowie ein Traggestell für eine solche Transporteinheit.

Im Herstellwerk von Flachglas, beispielsweise von Floatglas, werden am Ende der Fabrikationslinie Abschnitte von etwa 6 m Länge von dem kontinuierlich hergestellten Glasband abgetrennt, und diese großen Glasscheiben mit Abmessungen von etwa 6 × 3,2 m zu 10 bis 12 t schweren Paketen zusammengefaßt. Üblicherweise werden zwei solcher Glasscheibenpakete auf einem mit A-förmigen Mittelstützen versehenen Traggestell in gegeneinander geneigter Stellung angeordnet und fest mit dem Traggestell verspannt. Die so beladenen Traggestelle werden für den Transport zu den weiterverarbeitenden Werken oder zu den Kunden auf LKW-Tieflader oder auf Eisenbahnwaggons verladen.

Das Verladen der beladenen Traggestelle auf das Transportfahrzeug erfolgt bisher in der Regel mit Hilfe eines Krans, der das Traggestell von oben auf die Ladefläche des Transportfahrzeugs aufsetzt. Diese Verladetechnik erfordert das Vorhandensein eines entsprechend schweren Krans bei gleichzeitig hoher Bauhöhe der Kranbahn an der Belade- und an der Entladestation.

Gemäß einem anderen bekannten Verfahren wird ein Tiefladerfahrzeug verwendet, das keine durchgehenden Achsen und kein geschlossenes Tiefbett aufweist, sondern gabelförmig ausgebildet ist. Die Gabeln weisen nach innen gerichtete Tragschienen auf, auf die sich das Traggestell aufstützt. Das Fahrzeug wird in der Weise beladen, daß es mit seiner offenen Heckseite im abgesenkten Zustand rückwärts über das Traggestell fährt, wobei die seitlichen Tragschienen unter die Tragflächen des Traggestells fahren. Nach Erreichen der Endposition wird der Tieflader über eine Hubvorrichtung angehoben und übernimmt das Gestell, worauf die Heckseite des Fahrzeugs zur Stabilisierung des Fahrzeugs verriegelt wird. Dieses Verfahren hat den Nachteil, daß zur Erreichung einer ausreichenden Stabilität des gabelförmigen Fahrzeugs die Konstruktion sehr massiv ausgeführt werden muß. Infolgedessen ist einerseits die Konstruktion aufwendig, und andererseits bedingt das unvermeidbar hohe Gewicht des Fahrzeugs, daß die Nutzlast entsprechend niedriger liegt, denn nach den geltenden Bestimmungen für den Straßenverkehr darf der beladene Lastzug insgesamt maximal ein Gesamtgewicht von 38 t aufweisen. Es besteht aber ein erhebliches Interesse daran, Traggestelle mit zwei Glasscheibenpaketen von je 12,5 t Gewicht transportieren zu können, was mit diesem beschriebenen Fahrzeug nicht möglich ist.

Ausgehend von diesem Stand der Technik liegt der Erfindung die Aufgabe zugrunde, das Verfahren zum Be- und Entladen eines Tiefladerfahrzeugs mit leeren oder beladenen Traggestellen ohne Einsatz einer Krananlage so abzuwandeln, daß es mit einfacheren, leichteren und stabileren Fahrzeugkonstruktionen durchgeführt, durch die Gewichtsverminderung des Tiefladerfahrzeugs die Nutzlast erhöht, und der Be- und Entladevorgang sowie der Transport selbst mit größerer Sicherheit durchgeführt werden können.

Das erfindungsgemäße Verfahren zeichnet sich dadurch aus, daß das mit den Glasscheibenpaketen beladene Traggestell auf einem Ständer mit einer Gleitfläche abgestellt, und mit Hilfe von an dem Tiefladerfahrzeug angeordneten Mitteln rollend oder gleitend von der Gleitfläche des Ständers auf das in etwa auf das Niveau des Ständers gebrachte Tiefbett gezogen, bzw. von dem Tiefbett auf die Gleitfläche des Ständers geschoben wird.

Das neue Arbeitsverfahren sieht also vor, das mit den schweren Glasscheibenpaketen bzw. anderen schweren Platten beladene Traggestell an einer für das Tiefladerfahrzeug zugänglichen Stelle auf einem Ständer niveaugleich mit dem Tiefbett zwischenzulagern, und dem eigentlichen Auflade- bzw. Abladevorgang von dem Zwischenständer auf das Tiefbett und umgekehrt durch niveaugleiche horizontale Verschiebung des Traggestells vorzunehmen, und zwar mit Mitteln, die unmittelbar am Tiefladerfahrzeug selbst angeordnet sind. Dadurch entfallen alle zusätzlichen Verlade- und Hilfsmittel wie Krananlagen o. ä., und das Tiefladerfahrzeug und das Traggestell können bei verhältnismäßig leichter Konstruktion mit einem Höchstmaß an Stabilität und Sicherheit ausgeführt werden.

Die erfindungsgemäße Transporteinheit zur Durchführung des neuen Verfahrens umfaßt drei aufeinander abgestimmte Komponenten, nämlich das eigentliche Fahrzeug, das Traggestell und einen von dem Traggestell unabhängigen Ständer, die es in ihrem Zusammenwirken ermöglichen, daß die beladenen oder unbeladenen Traggestelle ohne zusätzliche Hilfsvorrichtungen von dem Fahrzeug aufgenommen, und ebenso ohne zusätzliche Hilfsvorrichtungen von dem Fahrzeug abgesetzt werden können.

In vorteilhafter Weiterbildung der Erfindung kann der vom Traggestell unabhängige Ständer unmittelbar als Heckklappe des Fahrzeugs dienen. Der Ständer erfüllt in diesem Fall nicht nur die Funktion als Abstellpalette für das Traggestell, sondern auch die Funktion des Fahrzeug-Heckverschlusses. Darüberhinaus kann er auch gleichzeitig noch als Transportmittel zum Rangieren des Traggestells verwendet werden.

Weitere Vorteile und Merkmale der Erfindung ergeben sich aus den Unteransprüchen und aus der nachfolgenden Beschreibung eines Ausführungsbeispiels der Erfindung anhand der Zeichnungen.

Von den Zeichnungen zeigt, jeweils in schematischer Darstellung

Figur 1 ein erfindungsgemäß ausgeführtes beladenes Traggestell und einen Ständer für dieses Traggestell ;

Figur 2 eine Seitenansicht des in Fig. 1 dargestellten Traggestells und des Ständers ;

Figur 3 ein Tiefladerfahrzeug als Sattelauflieger im Zeitpunkt der Übernahme eines beladenen Traggestells ;

Figur 4 das in Fig. 3 dargestellte Tiefladerfahrzeug nach Aufnahme des beladenen Traggestells ;

Figur 5 das Tiefladerfahrzeug während des Vorgangs des Entladens ;

Figur 6 eine Ansicht des Tiefladerfahrzeugs von der geöffneten Heckseite, und

Figur 7 einen fahrbaren Ständer.

Das Traggestell für die Glasscheibenpakete 1 umfaßt einen Fußteil 2, auf den zwei Glasscheibenpakete 1 hochkant aufgestapelt werden, und A-förmige Stützen 3, gegen die sich die Glasscheibenpakete 1 in leicht geneigter Stellung anlehnen. Die Stützen 3 sind durch Streben 4 gegeneinander abgestützt. Die äußeren Stützen 3 sind am oberen Ende mit Tragösen 5 versehen, in welche die Traghaken 6 einer Krantraverse 7 eingreifen. Mit Hilfe dieser Krantraverse 7 wird das Traggestell 2, 3 im beladenen oder im unbeladenen Zustand innerhalb des Herstellwerks der Glasscheiben transportiert und vor dem Verladen auf das Tiefladerfahrzeug auf den Ständer 10 abgesetzt.

Der Fußteil 2 des Traggestells ist unterhalb der Stützen 3 mit Gleitkufen 11 versehen. Diese Gleitkufen können sich stattdessen auch über die gesamte Länge des Fußteils 2 des Traggestells erstrecken. Sie ruhen und gleiten auf Gleitschienen 12, die entlang an beiden Längsseiten des Ständers 10 auf diesem angeordnet sind, und die die eigentlichen Trag- und Gleitflächen des Ständers 10 bilden. Die Materialien der Gleitkufen 11 und der Gleitflächen auf dem Ständer 10 sind so ausgewählt, daß die hohen Belastungen bei der Gleitbewegung einen minimalen Abrieb bewirken.

Der Ständer 10 kann grundsätzlich aus einer beliebigen Konstruktion bestehen. Wesentlich ist nur, daß die Gleitfläche der Gleitschienen 12 eine Höhe H aufweist, die der Höhe H' der entsprechenden Gleitschienen 13 im Tiefbett 34 des Tiefladers 35 im Zeitpunkt des Beladens entspricht. Wenn das Tiefladerfahrzeug das Tiefbett pneumatisch oder hydraulisch absenken kann, kann der Ständer 10 eine entsprechend geringe Höhe von etwa 40 cm aufweisen.

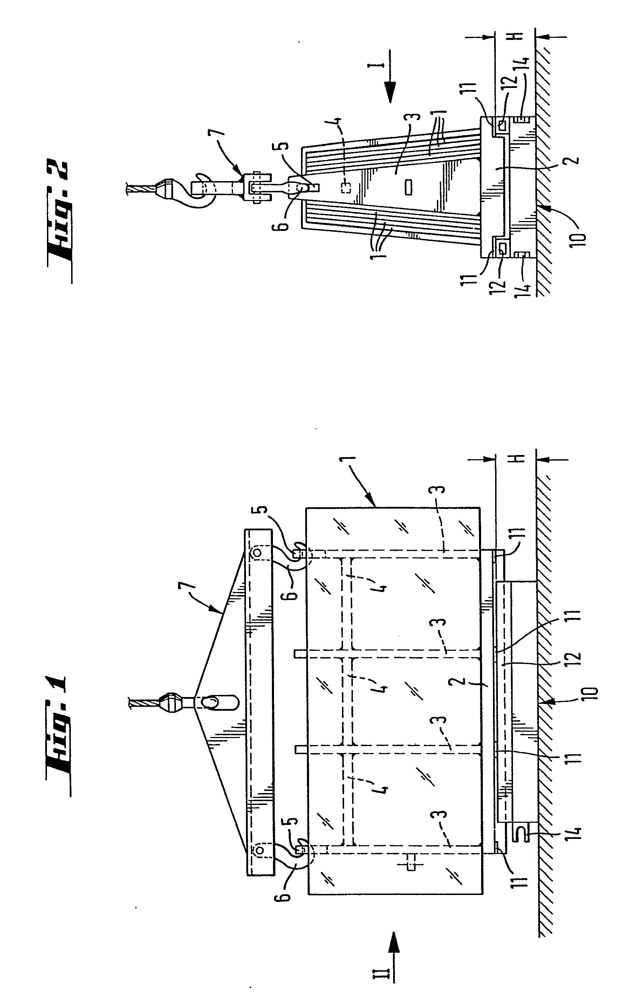

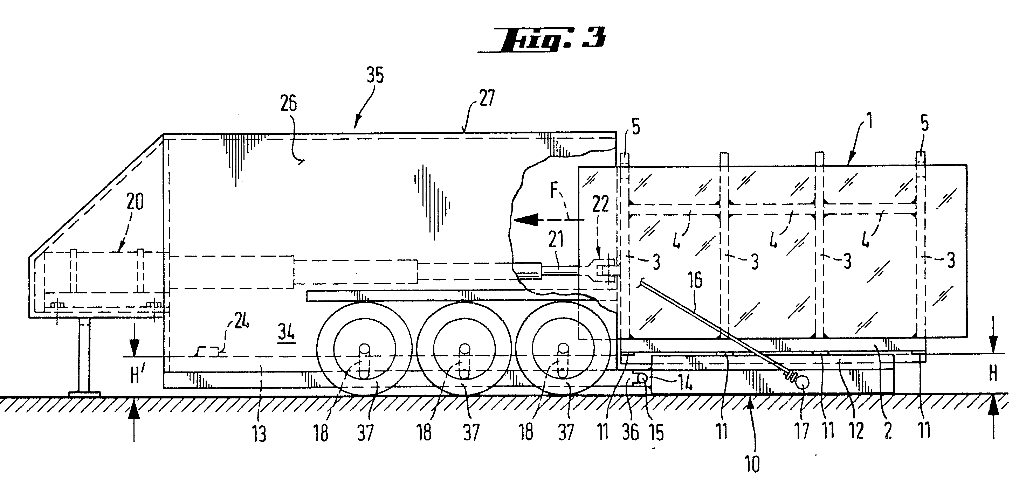

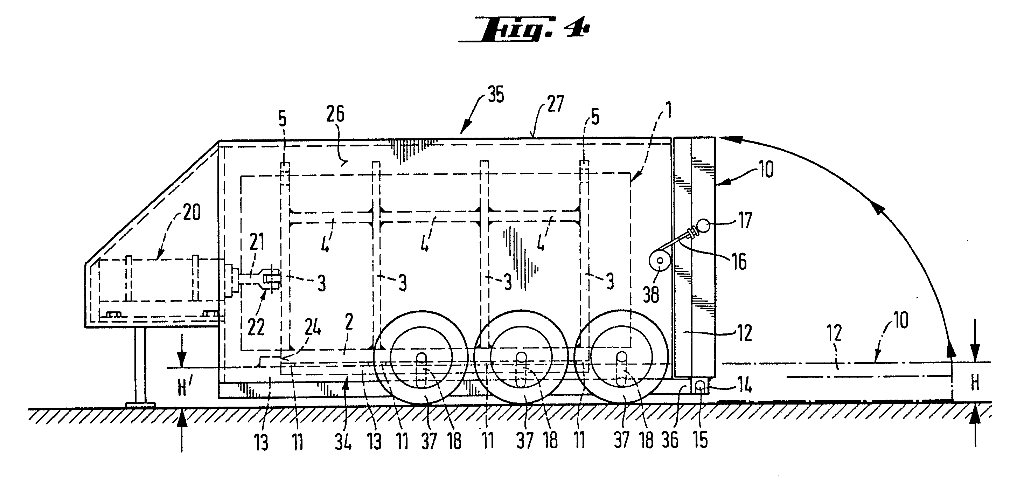

Der Ständer 10 hat eine geringere Längenausdehnung als das Traggestell 2,3. Der Tieflader 35 kann infolgedessen mit dem Laderahmen 36 des Tiefbetts 34 unter den überstehenden Teil des Fußteils 2 fahren, wobei die Gleitschienen 13 im Tiefbett 34 des Tiefladers 35 in der Übernahmeposition mit den Gleitschienen 12 auf dem Ständer 10 fluchten (H = H') ; Fig. 3.

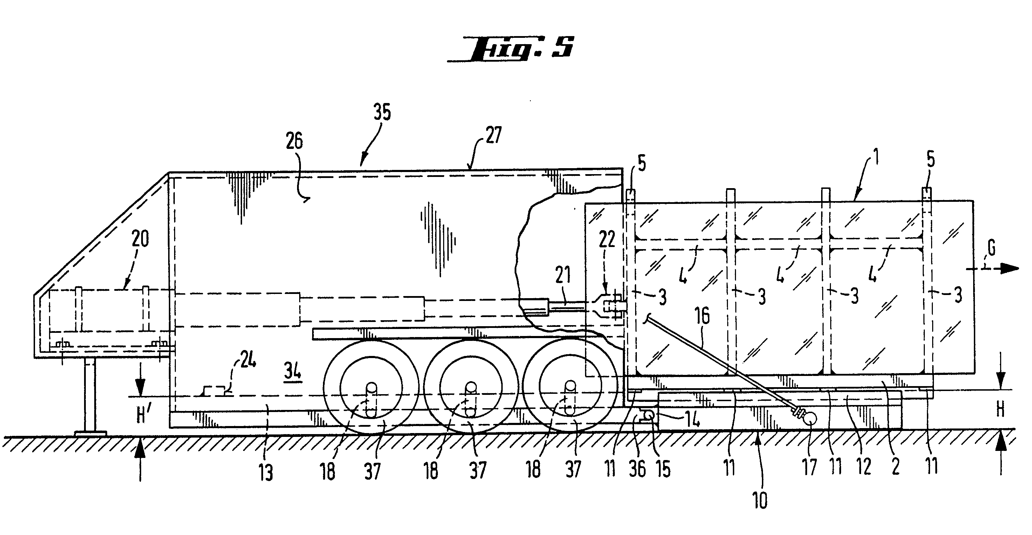

Der Ständer 10 ist nach einer bevorzugten Ausführungsform der Erfindung konstruktiv so ausgeführt, daß er als Heckklappe für den Tieflader 35 dient. Zu diesem Zweck ist er am vorderen Ende mit zwei vorstehenden Kupplungsgabeln 14 versehen, in die entsprechende am Tieflader angeordnete Bolzen 15 eingreifen. Die Länge des Ständers 10 entspricht in diesem Fall der Höhe des Fahrzeugaufbaus. Der Tieflader 35 ist im übrigen mit einer Hebevorrichtung (Seil 16, Seilwinde 38) versehen, die an seitlich an dem Ständer 10 angeordnete Befestigungsnocken 17 angekuppelt wird, und die den als Heckklappe ausgebildeten Ständer 10 in die senkrechte Schließstellung bringt. Beim Schließen der Heckklappe wird diese um die Bolzen 15 herum verschwenkt und ruht mit den Kupplungsgabeln 14 auf dem Bolzen 15 (Fig. 4).

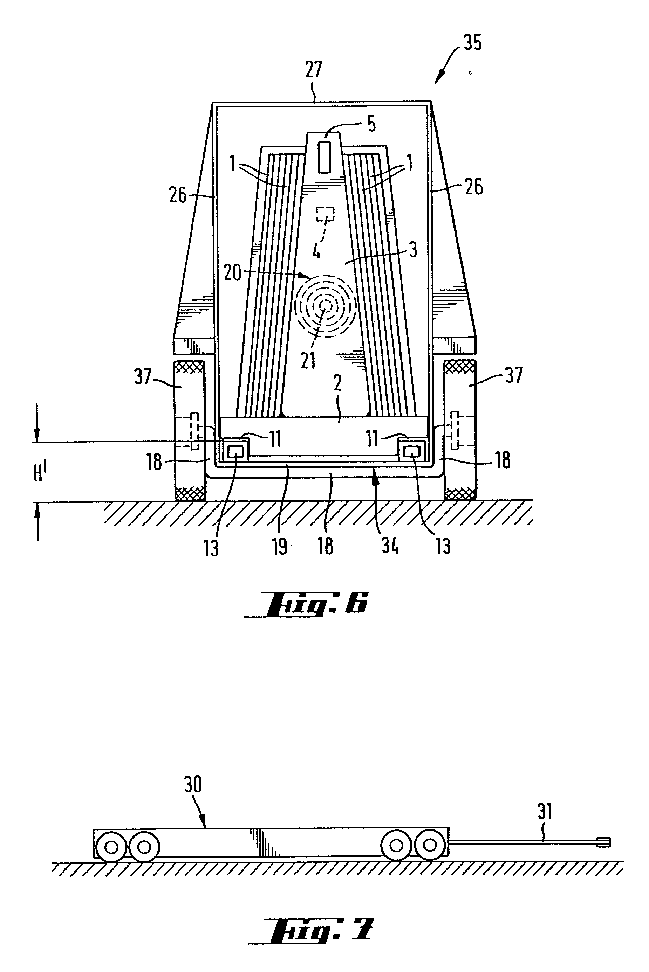

Das Tiefladerfahrzeug 35 hat gekröpfte Achsen 18 (Fig. 6), auf denen der Fahrzeugaufbau mit dem einen geschlossenen Boden 19 aufweisenden Tiefbett 34 gefedert aufliegt und die Räder 37 gelagert sind. Zwischen den abgekröpften Achsenabschnitten und dem Fahrzeugaufbau sind nicht dargestellte pneumatische Zylinder oder Luftfederbälge angeordnet, die ein Anheden und Absenken des Tiefbetts 34 beim Beladevorgang und beim Entladevorgang erlauben.

Zum Beladen des Tiefladers 35 mit einem Traggestell 2,3 wird der Tieflader mit abgesenktem Tiefbett 34 rückwärts an das auf dem Ständer 10 ruhende Traggestell 2,3 so weit herangefahren, bis die am hinteren Ende des Tiefbetts angeordneten Bolzen 15 in die Kupplungsgabeln 14 am Ständer 10 eingreifen. Die Gleitflächen der im Tiefbett angeordneten Gleitschienen 13 liegen dann auf derselben Höhe H' wie die Gleitflächen der Gleitschienen 12 des Ständers 10 (H). Nach dem Ankuppeln des Ständers 10 an den Tieflader durch Verbinden der Seile 16 mit den Bolzen 17 des Ständers 10 wird der Teleskopzylinder 20 beaufschlagt und dadurch so weit ausgefahren, bis das Ende der innersten Kolbenstange 21 das Traggestell 2,3 erreicht. Über eine geeignete Kupplungsvorrichtung 22 wird die Kolbenstange 21 mit dem Traggestell verbunden. Der Teleskopzylinder 20, der als doppelt wirkender Zylinder ausgeführt ist, wird sodann in der anderen Richtung mit dem Druckmedium beaufschlagt, wodurch das beladene Traggestell in Richtung des Pfeiles F auf das Tiefbett gezogen wird (Fig. 3), bis das vordere Ende des Fußteils 2 in seiner Endstellung den Anschlag 24 berührt. Die Kolbenstange 21 bleibt an dem Traggestell 3 angekuppelt, und der Teleskopzylinder 20 bleibt unter Druckbeaufschlagung, so daß innerhalb des Fahrzeugs 35 das Traggestell in seiner Lage hierdurch festgelegt ist und Verschiebungen in Längsrichtung nicht möglich sind. Sodann wird, wie in Fig. 4 dargestellt ist, die offene Heckseite des Fahrzeugs durch Verschwenken des jetzt als Heckklappe dienenden Ständers 10 geschlossen. Nach dem Anheben des Fahrzeugaufbaus mit Hilfe der hydraulischen Druckzylinder bzw. der Luftfederbälge ist das Tiefladerfahrzeug fahrbereit.

Zum Entladen des Fahrzeugs wird der Tieflader 35 rückwärts an die Stelle gefahren, an der das Traggestell 2,3 abgesetzt werden soll. Sodann wird der als Heckklappe dienende Ständer 10 in die horizontale Lage verschwenkt, und der Fahrzeugaufbau auf das gewünschte Niveau abgesenkt, bei dem der Ständer 10 auf dem Boden aufliegt. Der Ständer 10 bleibt mit Hilfe der Seile 16 an dem Fahrzeug angekuppelt. Der Teleskopzylinder 20 wird nunmehr in dem Sinne beaufschlagt, daß sich die Kolbenstange 21 in Richtung des Pfeiles G bewegt (Fig. 5), und dadurch das Traggestell mit den Glasscheibenpaketen aus dem Tiefbett herausgeschoben und auf den Ständer 10 aufgeschoben wird. Sobald die Endposition des Traggestells 2,3 auf dem Ständer 10 erreicht ist, wird die Kupplung 22 zwischen der Kolbenstange 21 und dem Traggestell 2,3 gelöst. Das Fahrzeug 35 wird anschliessend vorgefahren, bis das Traggestell mit den Glasscheiben 1 den Innenraum des Fahrzeugs vollständig verlassen hat. Darauf steht das Fahrzeug für einen neuen Beladevorgang bereit.

Das Fahrzeug hat im dargestellten Fall einen geschlossenen Aufbau, und ist nur durch die Heckklappe zu öffnen. Die Seitenwände 26 und die Decke 27 können als feste Wände ausgeführt sein. Sie können aber auch aus einer Plane bestehen, die über ein entsprechendes Stützgerüst des Fahrzeugs gespannt wird.

Der Ständer 10 kann gewünschtenfalls auch als fahrbarer Wagen 30 ausgeführt sein mit Rädern, die beispielsweise über eine Deichsel 31 lenkbar sind. Diese Anordnung empfiehlt sich, wenn das Tiefladerfahrzeug nicht bis zu dem gewünschten Lagerplatz des Traggestells fahren kann, und infolgedessen ein Weitertransport des Traggestells erforderlich ist, andererseits aber eine Kraneinrichtung nicht zur Verfügung steht.

Die Erfindung ist nicht auf die beschriebene Anwendung für den Transport von Glasscheibenpaketen beschränkt. Sie kann in allen Fällen Anwendung finden, in denen ähnliche Transportprobleme zu lösen sind, beispielsweise andere schwere Güter, beispielsweise Bauelemente wie Beton- oder andere Fertigbauteile, Platten usw. zu transportieren sind.

**Ansprüche**

1. Verfahren zum Aufladen bzw. zum Abladen eines mit schweren Glasscheibenpaketen (1) großer Abmessungen beladenen Traggestells (2, 3) auf das Tiefbett (34) bzw. von dem Tiefbett (34) eines Tiefladerfahrzeugs, dadurch gekennzeichnet, daß das mit den Glasscheibenpaketen beladene Traggestell (2, 3) auf einem Ständer (10) mit einer Gleitfläche abgestellt, und mit Hilfe von an dem Tiefladerfahrzeug angeordneten Mitteln (20, 21) rollend oder gleitend von der Gleitfläche des Ständers (10) auf das in etwa auf das Niveau des Ständers gebrachte Tiefbett (34) gezogen, bzw. von dem Tiefbett auf die Gleitfläche des Ständers geschoben wird.

2. Verfahren nach Anspruch 1, dadurch gekennzeichnet, daß vor dem Verschieben des Traggestells von dem Tiefbett (34) auf den Ständer (10) und umgekehrt der Ständer (10) an das Tiefladerfahrzeug angekuppelt wird.

3. Verfahren nach Anspruch 2, dadurch gekennzeichnet, daß vor bzw. nach dem Auf- bzw. Abladen des Traggestells (2, 3) der Ständer (10) als um eine horizontale Schwenkachse verschwenkbare Heckklappe des Tiefladerfahrzeugs verwendet wird.

4. Transporteinheit zur Durchführung des Verfahrens nach Anspruch 1, bestehend aus einem Tiefladerfahrzeug und einem die Glasscheibenpakete (1) aufnehmenden, auf das Tiefbett des Tiefladerfahrzeugs aufsetzbaren Traggestell (2, 3) dadurch gekennzeichnet, daß das Tiefladerfahrzeug durchgehende gekröpfte Achsen (18) aufweist, deren abgekröpfte Mittelteile das Tiefbett (34) tragen, daß im Tiefbett durchgehend bis zum hinteren Ende ebene horizontale Lager- und Gleitschienen (13) vorgesehen sind, und der Fußteil (2) des Traggestells mit diesen Gleitflächen zusammenwirkende, die horizontale gleitende oder rollende Verschiebung erlaubende Gleitkufen (11) oder Rollen für die gleitende Be- und Entladung von der Heckseite her aufweist, und daß das Tiefladerfahrzeug mit einer mit dem Traggestell kuppelbaren, das Traggestell von einem Ständer (10) auf das Tiefbett ziehenden bzw. von dem Tiefbett nach außen auf den Ständer (10) schiebenden Zug- und Schubvorrichtung (20, 21) versehen ist.

5. Transporteinheit nach Anspruch 4, dadurch gekennzeichnet, daß der Ständer (10) mit dem Tiefladerfahrzeug (35) kuppelbar ist (Seil 16, Befestigungsnocken 17, Winde 38).

6. Transporteinheit nach Anspruch 5, dadurch gekennzeichnet, daß der Ständer (10) am hinteren Ende des Tiefladers lösbar angelenkt werden kann und als um eine horizontale Schwenkachse (Bolzen 15) verschwenkbare Heckklappe dient.

7. Transporteinheit nach einem der Ansprüche 4 bis 6, dadurch gekennzeichnet, daß das Tiefbett (34) einen geschlossenen Boden (19) aufweist (Fig. 6).

8. Transporteinheit nach einem der Ansprüche 4 bis 6, dadurch gekennzeichnet, daß der Fahrzeugaufbau mit dem Tiefbett über pneumatische oder hydraulische Hubvorrichtungen absenkbar und anhebbar ist.

9. Transporteinheit nach einem der Ansprüche 4 bis 8, dadurch gekennzeichnet, daß das Traggestell (2, 3) in seiner Endposition auf dem Tiefbett lagefest fixiert ist.

10. Transporteinheit nach Anspruch 9, dadurch gekennzeichnet, daß die Fixierung des Traggestells auf dem Tiefbett durch die Zug- und Schubvorrichtung (20, 21, 22) erfolgt.

11. Transporteinheit nach einem der Ansprüche 4 bis 10, dadurch gekennzeichnet, daß die mit dem Traggestell kuppelbare Zug- und Schubvorrichtung ein Zugseil- bzw. Kettentrieb ist.

12. Transporteinheit nach einem der Ansprüche 4 bis 10, dadurch gekennzeichnet, daß die mit dem Gestell kuppelbare Zug- und Schubvorrichtung ein pneumatisch oder hydraulisch wirkender Teleskopzylinder (20, 21) ist.

13. Transporteinheit nach einem der Ansprüche 4 bis 12, dadurch gekennzeichnet, daß der Ständer (30) mit Rädern versehen ist und als fahrbare Transportpalette für das Traggestell dient (Fig. 7).

14 Transporteinheit nach einem der Ansprüche 4 bis 13, dadurch gekennzeichnet, daß das Tiefladerfahrzeug als Innenlader ausgebildet ist und mit Ausnahme der Heckseite einen allseits geschlossenen Aufbau aufweist.

15. Transporteinheit nach einem der Ansprüche 4 bis 14, dadurch gekennzeichnet, daß das Tiefladerfahrzeug als Sattel-Anhänger ausgebildet ist.

## Claims

1. Method of loading and unloading a supporting frame (2, 3) loaded with heavy and large parcels (1) of glass panes onto and from the well (34) of a low-level load transporting vehicle, characterised in that the supporting frame (2, 3) loaded with the parcels (1) of glass panes is put down on a stand (10) with a sliding surface, and by means of devices (20, 21) arranged on the low-level load transporting vehicle is pulled in a rolling or sliding manner from the sliding surface of the stand (10) onto the well (34) brought approximately to the level of the stand, or pushed in a rolling or sliding manner from the well onto the sliding surface of the stand.

2. Method according to Claim 1, characterised in that before the supporting frame is moved from the well (34) onto the stand (10) and vice versa the stand (10) is coupled to the low-level load transporting vehicle.

3. Method according to Claim 2, characterised in that before or after the loading of unloading of the supporting frame (2, 3), the stand (10) is used as a rear tailboard of the low-level load transporting vehicle, which can be swivelled about a horizontal swivel axis.

4. Transporting unit for performing the method according to Claim 1, comprising a low-level load transporting vehicle and a supporting frame (2, 3) which receives the parcels (1) of glass panes and can be set up on the well of the low-level load transporting vehicle, characterised in that the low-level load transporting vehicle has continuous, cranked axes (18), the offset centre parts of which carry the well (34), that flat, horizontal bearing and slide rails (13) are provided in the well continuously as far as the rear end, and the base portion (2) of the supporting frame has runners (11) or rollers, interacting with these sliding surfaces and permitting the horizontal sliding or rolling movement, for the sliding loading and unloading from the tail side, and that the low-level load transporting vehicle is provided with a pulling and pushing device (20, 21), which can be coupled to the supporting frame and pulls the supporting frame from a stand (10) onto the well or pushes the supporting frame from the well outwards onto the stand (10).

5. Transporting unit according to Claim 4, characterised in that the stand (10) can be coupled to the low-level load transporting vehicle (35) (rope 16, clamping dog 17, reel 38).

6. Transporting unit according to Claim 5, characterised in that the stand (10) can be detachably hinged to the rear end of the low-level loader, and is used as a rear tailboard which can be swivelled about a horizontal swivel axis (pin 15).

7. Transporting unit according to one of Claims 4 to 6, characterised in that the well (34) has an enclosed base (19) (Fig. 6).

8. Transporting unit according to one of Claims 4 to 6, characterised in that the vehicle construction can be lowered and lifted together with the well by means of pneumatic of hydraulic lifting devices.

9. Transporting unit according to one of Claims 4 to 8, characterised in that in its final position on the well the supporting frame (2, 3) is located in a fixed-position.

10. Transporting unit according to Claim 9, characterised in that the supporting frame is located on the well by the pulling and pushing device (20, 21, 22).

11. Transporting unit according to one of Claims 4 to 10, characterised in that the pulling and pushing device which can be coupled to the supporting frame is a haulage rope or chain drive.

12. Transporting unit according to one of Claims 4 to 10, characterised in that the pulling and pushing device which can be coupled to the frame is a pneumatically or hydraulically acting telescopic cylinder (20, 21).

13. Transporting unit according to one of Claims 4 to 12, characterised in that the stand (30) is provided with wheels and acts as a mobile transport pallet for the supporting frame (Fig. 7).

14. Transporting unit according to one of Claims 4 to 13, characterised in that the low-level load transporting vehicle is designed as an internal loader and with the exception of the tail side has a construction which is enclosed on all sides.

15. Transporting unit according to one of Claims 4 to 14, characterised in that the low-level load transporting vehicle is designed as a semitrailer.

## Revendications

1. Procédé de chargement et de déchargement d'un cadre porteur (2, 3) chargé de lourdes piles de vitres (1) de grandes dimensions sur le plateau (34) ou du plateau (34) d'un véhicule surbaissé, caractérisé en ce que le cadre porteur (2, 3) chargé de piles de vitres (1) est déposé sur un support (10) muni d'un plan de glissement, puis tiré en roulant ou glissant, à l'aide de dispositifs (20, 21) prévus sur le véhicule surbaissé, de la surface de glissement du support (10) sur le plateau (34) amené pratiquement au niveau de ce dernier, ou poussé du plateau sur la surface de glissement de ce même support.

2. Procédé selon la revendication 1, caractérisé en ce que, avant le transfert du cadre porteur du plateau (34) sur le support (10), et inversement, ce même support (10) est accouplé au véhicule surbaissé.

3. Procédé selon la revendication 2, caractérisé en ce que, avant ou après le chargement ou le déchargement du cadre porteur (2, 3), le support (10) sert pour le véhicule surbaissé de hayon pivotant autour d'un axe horizontal.

4. Unité de transport pour la réalisation du procédé selon la revendication 1, composée d'un véhicule surbaissé et d'un cadre porteur (2, 3) qui reçoit les piles de vitres (1) et peut être déposé sur le plateau du véhicule précité, caractérisée en ce que le véhicule surbaissé présente des essieux transversaux coudés (18), dont les sections centrales incurvées supportent le plateau (34), en ce que ce plateau comporte, jusqu'à son extrémité arrière, des glissières et surfaces d'appui (13) horizontales, planes et continues, la section de base (2) du cadre porteur présentant, en combinaison avec ces surfaces de glissement, des patins (11) ou galets permettant un mouvement horizontal de glissement ou de roulement pour le chargement et le déchargement à partir du côté arrière, et en ce que le véhicule surbaissé est muni d'un dispositif de traction et de poussée (20, 21) qui peut être accouplé au cadre porteur, qu'il tire d'un support (10) sur le plateau, ou repousse de ce dernier sur le support (10).

5. Unité de transport selon la revendication 4, caractérisée en ce que le support (10) peut être accouplé au véhicule surbaissé (35) (câble 16, came de fixation 17, treuil 38).

6. Unité de transport selon la revendication 5, caractérisée en ce que le support (10) peut avoir une articulation amovible à l'extrémité arrière de la semi-remorque et servir de hayon pivotant autour d'un axe horizontal (axe 15).

7. Unité de transport selon une quelconque des revendications 4 à 6, caractérisée en ce que le plateau (34) présente un fond fermé (19) (figure 6).

8. Unité de transport selon une quelconque des revendications 4 à 6, caractérisée en ce que la carrosserie du véhicule avec le plateau peut être abaissée et relevée, par l'intermédiaire de dispositifs de levage pneumatiques ou hydrauliques.

9. Unité de transport selon une quelconque des revendications 4 à 8, caractérisée en ce que le cadre porteur (2, 3) est fixé sur le plateau dans sa position finale.

10. Unité de transport selon la revendication 9, caractérisée en ce que la fixation du cadre porteur sur le plateau est assurée par le dispositif de traction et de poussée (20, 21, 22).

11. Unité de transport selon une quelconque des revendications 4 à 10, caractérisée en ce que le dispositif de traction et de poussée, auquel le cadre porteur peut être accouplé, est une transmission par câble ou par chaîne.

12. Unité de transport selon une quelconque des revendications 4 à 10, caractérisée en ce que le dispositif de traction et de poussée, auquel peut être accouplé le cadre porteur, est un vérin télescopique pneumatique ou hydraulique (20, 21).

13. Unité de transport selon une quelconque des revendications 4 à 12, caractérisée en ce que le support (30), équipé de roues, sert de palette mobile pour le cadre porteur (figure 7).

14. Unité de transport selon une quelconque des revendications 4 à 13, caractérisée en ce que le véhicule surbaissé est un chargeur intérieur et présente une carrosserie fermée de tous côtés, exception faite du côté arrière.

15. Unité de transport selon une quelconque des revendications 4 à 14, caractérisée en ce que le véhicule surbaissé est représenté par une semi-remorque.

*Fig. 1*

*Fig. 2*

0 069 321

*Fig. 3*

_Fig. 4_

0 069 321

Fig. 5

0 069 321

Fig. 6

Fig. 7

5